# EUROPÄISCHE PATENTSCHRIFT

(11) **EP 3 049 274 B1**
(45) Veröffentlichungstag und Bekanntmachung des Hinweises auf die Patenterteilung: **12.07.2017**
(21) Anmeldenummer: 14757920.5
(22) Anmeldetag: 28.08.2014
(51) Int. Cl.: B60L 11/18, H01M 8/04, H01M 8/04007, B60L 1/00, B60L 1/02, B60L 3/00, B60L 15/20

(54) **BETRIEBSVERFAHREN FÜR EINE BRENNSTOFFZELLEN-ANLAGE**
OPERATING METHOD FOR A FUEL CELL SYSTEM
PROCÉDÉ D'EXPLOITATION D'UNE INSTALLATION DE PILES À COMBUSTIBLE

(30) Priorität: 24.09.2013 DE 102013219209
(43) Veröffentlichungstag der Anmeldung: 03.08.2016
(73) Patentinhaber: Bayerische Motoren Werke Aktiengesellschaft, 80809 München (DE)
(72) Erfinder: HAASE, Stefan, 80807 München (DE); STERZENBACH, Marcel, 84034 Landshut (DE)
(86) Internationale Anmeldenummer: PCT/EP2014/068300
(87) Internationale Veröffentlichungsnummer: WO 2015/043868

(56) Entgegenhaltungen:
- DE-A1-102008 029 529
- DE-A1-102011 122 306
- US-A1- 2013 139 997

## Beschreibung

Die Erfindung betrifft ein Betriebsverfahren für eine Brennstoffzellen-Anlage mit einer von Umgebungsluft durchströmten Kühlerstruktur und einem Brennstoffzellenstack, von dessen Abluftstrom zumindest ein Teil solchermaßen an die Kühlerstruktur heranführbar ist, dass dieser herangeführte Abluftstrom an der Kühlerstruktur nach dem Strahlpumpen-Prinzip eine Erhöhung des Massenstroms der Umgebungsluft durch die Kühlerstruktur bewirkt. Eine entsprechende Abluftführung eines Brennstoffzellenstacks ist in den noch nicht veröffentlichten deutschen Patentanmeldungen mit den amtlichen Aktenzeichen 102012211421.1 und 102013214602.7 beschrieben und es nutzt eine solche Abluftführung einen Teil der im Brennstoffzellen-Abluftstrom enthaltenen Energie zur Förderung von Umgebungsluft durch eine sog. Kühlerstruktur, die insbesondere zur Kühlung der Brennstoffzellen des Brennstoffzellenstacks in der Brennstoffzellen-Anlage vorgesehen ist. Weiterhin ist bekannt, dass ein Teil der im Abluftstrom einer Brennstoffzelle bzw. eines Brennstoffzellenstacks insbesondere in Form von Überdruck enthaltenen Energie in einer Turbine oder einem anderen sog. Expander rückgewonnen werden kann, wozu lediglich beispielshalber auf die DE 10 2011 122 306 A1 verwiesen wird. Ein solcher Expander oder dgl. wird vorliegend als Gasentspannungsmaschine bezeichnet, nachdem darin der mit einem gewissen Druck aus dem Brennstoffzellenstack austretende Abluftstrom insbesondere eine Druckreduzierung erfährt bzw. der besagte gewisse Druck zum Antrieb der Turbine oder dgl. (Gasentspannungsmaschine) genutzt wird.

Vorliegend soll nun aufgezeigt werden, wie die im Abluftstrom enthaltene Energie noch besser in möglichst günstiger Weise genutzt werden kann (= Aufgabe der vorliegenden Erfindung).

Die Lösung dieser Aufgabe besteht in einem Betriebsverfahren für eine Brennstoffzellen-Anlage mit einer von Umgebungsluft durchströmten Kühlerstruktur und einem Brennstoffzellenstack, von dessen Abluftstrom zumindest ein Teil solchermaßen an die Kühlerstruktur heranführbar ist, dass dieser herangeführte Abluftstrom an der Kühlerstruktur nach dem Strahlpumpen-Prinzip eine Erhöhung des Massenstroms der Umgebungsluft durch die Kühlerstruktur bewirkt, und wobei zumindest ein Teil des Abluftstroms des Brennstoffzellenstacks durch eine Gasentspannungsmaschine führbar ist und die Aufteilung der im Abluftstrom enthaltenen und in der Gasentspannungsmaschine und/oder nach dem Strahlpumpen-Prinzip an der Kühlerstruktur zurückgewinnbaren Energie durch eine elektronische Steuereinheit an Randbedingungen, unter denen die Aufteilung erfolgt, angepasst verändert wird. Vorteilhafte Weiterbildungen sind Inhalt der Unteransprüche.

Erfindungsgemäß sind verschiedene Möglichkeiten zur Rückgewinnung der im Abluftstrom einer Brennstoffzelle enthaltenen Energie vorgesehen und es erfolgt eine gezielte Aufteilung der Energie-Rückgewinnung auf diese verschiedenen Möglichkeiten, nämlich (wie allgemein bekannt) auf eine Gasentspannungsmaschine einerseits und auf die (zumindest internen Stand der Technik bildende) Möglichkeit, mittels des Strahlpumpen-Prinzips verstärkt Umgebungsluft durch die genannte Kühlerstruktur zu fördern andererseits. Ehe näher erläutert wird, unter welchen Randbedingungen bzw. Aspekten die besagte Aufteilung der Energie-Rückgewinnung gezielt erfolgt, sei zunächst erläutert, wie diese Aufteilung als solche überhaupt durchgeführt werden kann.

So kann der Abluftstrom des Brennstoffzellenstacks zunächst vollständig durch die Gasentspannungsmaschine geführt und daran anschließend wie in einer der eingangs genannten Patentanmeldungen beschrieben an (oder in) eine Kühlerstruktur heran geführt werden, um an dieser nach dem Strahlpumpenprinzip eine Erhöhung des Massenstroms der Umgebungsluft durch diese Kühlerstruktur zu bewirken. Die Heranführung an die Kühlerstruktur befindet sich damit stromab des Gasentspannungsmaschine. Wieviel Energie nun zuerst in der Gasentspannungsmaschine abgebaut wird (und damit für die Nutzung des Strahlpumpenprinzips nicht mehr zur Verfügung steht) kann durch gezielte Einstellung der in der Gasentspannungsmaschine herrschenden Strömungsverhältnisse bestimmt werden, d.h. es wird bspw. mittels verstellbarer Leitschaufeln in einer Turbine (oder dgl.) der Druckabfall in der Gasentspannungsmaschine gezielt eingestellt. Alternativ kann der Gasentspannungsmaschine nur ein (erster) Teil des Brennstoffzellen-Abluftstromes zugeführt werden, während der andere (zweite) Teil des Brennstoffzellen-Abluftstromes direkt zur Kühlerstruktur geführt wird, um dort (vorzugsweise mit dem aus der Gasentspannungsmaschine austretenden Luftstrom zuvor wieder zusammengeführt) nach dem Strahlpumpen-Prinzip das besagte und Umgebungsluft durch die Kühlerstruktur fördernde Druckgefälle zu erzeugen. Selbstverständlich ist auch eine Kombination dieser beiden angegebenen Alternativen möglich.

Was nun die Randbedingungen betrifft, anhand derer eine elektronische Steuereinheit die erfindungsgemäße Aufteilung der Energie-Rückgewinnung aus dem Brennstoffzellen-Abluftstrom auf die Gasentspannungsmaschine einerseits und die Kühlerstruktur andererseits (hier und im weiteren wird der Einfachheit halber lediglich der Begriff "Kühlerstruktur" für die Heranführung des Brennstoffzellen-Abluftstromes an die Kühlerstruktur solchermaßen, dass dieser nach dem Strahlpumpen-Prinzip eine Erhöhung des Massenstroms der Umgebungsluft durch die Kühlerstruktur bewirkt, verwendet) vornimmt, so berücksichtigt diese elektronische Steuereinheit direkt oder indirekt gemessen insbesondere die Temperatur des in der Kühlerstruktur zu kühlenden Mediums (= "Kühlmittel") und somit praktisch den Kühlleistungsbedarf der Brennstoffzellenanlage. Dabei kann neben oder anstelle der aktuell gemessenen Temperatur (entweder des zu kühlenden Mediums oder der Kühlerstruktur selbst) auch eine anhand geeigneter Daten rechnerisch geschätzte und in absehbarer Zeit zu erwartende Temperatur berücksichtigt werden. Direkt oder indirekt kann hierbei auch die aktuelle und/oder in absehbarer Zeit geforderte elektrische Leistung des Brennstoffzellenstacks mit berücksichtigt werden, da diese nicht nur Rückschlüsse auf die aktuellen Temperaturverhältnisse, sondern auch auf die in absehbarer Zeit zu erwartenden Temperaturverhältnisse zulässt.

Im Falle einer in einem Kraftfahrzeug verbauten erfindungsgemäßen Brennstoffzellenanlage sind die bislang genannten Randbedingungen einer elektronischen Systemsteuereinheit üblicherweise bekannt, wobei vorgeschlagen wird, weiterhin die Umgebungstemperatur und/oder die Fahrgeschwindigkeit des mit der Brennstoffzellenanlage ausgerüsteten Fahrzeugs für die besagte Aufteilung zu berücksichtigen. Selbstverständlich kann oder sollte auch der aktuelle Druckabfall im Brennstoffzellen-Abluftstrom an der Gasentspannungsmaschine direkt oder indirket, vorzugsweise in Form einer geeigneten Ersatzgröße, in die in der elektronischen Steuereinheit durchgeführten Berechnungen mit eingehen.

Wie bereits erwähnt steuert bzw. regelt die besagte elektronische Steuereinheit im Rahmen der Durchführung des erfindungsgemäßen Betriebsverfahrens vorrangig den Druckabfall des Brennstoffzellen-Abluftstromes an der Gasentspannungsmaschine in einem Kraftfahrzeug mit einem flüssigkeitsgekühlten Brennstoffzellenstack anhand - unter anderem - der Temperatur des Kühlkreislaufes der Brennstoffzellenanlage, der Fahrgeschwindigkeit des Kraftfahrzeugs, der geforderten Leistung des Fahrzeugs bzw. der Brennstoffzellenanlage sowie des aktuellen Druckabfalls an der Gasentspannungsmaschine. Insbesondere bezüglich der geforderten Leistung des Kraftfahrzeugs kann dabei eine vorausschauende Berechnung bspw. anhand von GPS-Daten, bspw. für eine bevorstehende Bergauffahrt, durchgeführt werden. Liegt dann ein Anstieg der Kühlmittel-Temperatur oder der zu erwartenden Kühlmittel-Temperatur über einen vorgegebenen Grenzwert vor, so wird die bis dahin sinnvollerweise durchgeführte Energie-Rückgewinnung in der Gasentspannungsmaschine reduziert, was zwar eine Absenkung des Systemwirkungsgrads zur Folge hat, aber gleichzeitig eine höhere Kühlleistung bewirkt. Damit kann eine höhere Leistungsabgabe des Brennstoffzellenstacks unter anderem bei hohen Umgebungstemperaturen, bei hohen Leistungsanforderungen und bei geringer Fahrgeschwindigkeit des Fahrzeugs (bspw. bei Bergfahrt) erreicht werden. Ist hingegen der Kühlleistungsbedarf der Brennstoffzellenanlage gering und wird somit keine nennenswerte quasi zusätzliche Kühlleistung benötigt, so erfolgt vorzugsweise die maximale Energie-Rückgewinnung aus dem Brennstoffzellen-Abluftstrom in der Gasentspannungsanlage, wobei letzteres allgemein - und somit nicht nur für eine in einem Kraftfahrzeug verbaute Brennstoffzellenanlage - gilt.

Auf den Einsatz in einem Kraftfahrzeug zurückkommend kann somit aus der aktuellen Fahrzeuggeschwindigkeit sowie der Leistungsanforderung aus in üblichen Navigationssystemen vorhandenen Streckendaten bzw. Annahmen zum weiteren Fahrbetrieb vorberechnet werden, wie sich allgemein der Kühlbedarf bzw. im Falle einer flüssigkeitsgekühlten Brennstoffzellenanlage die Kühlmitteltemperatur weiter entwickeln wird. Ist eine Temperatur oberhalb einer vorgegebenen Maximaltemperatur zu erwarten, so wird bereits vorgreifend der Druckabfall an der Gasentspannungsmaschine reduziert und ein größerer Anteil der Energie-Rückgewinnung aus dem Brennstoffzellen-Abluftstrom wie vorhergehend beschrieben der Kühlerstruktur zugeführt, d.h. es wird der Abluftstrom derart an die Kühlerstruktur herangeführt, dass dieser an der Kühlerstruktur nach dem Strahlpumpen-Prinzip eine Erhöhung des Massenstroms von Umgebungsluft durch die Kühlerstruktur bewirkt.

Wird hingegen das Fahrzeug abgebremst, so ist mit einem geringeren Kühlleistungsbedarf zu rechnen und es wird ein größerer Anteil der im Brennstoffzellen-Abluftstrom enthaltenen Energie vorzugsweise in Form eines größeren Anteils des Brennstoffzellen-Abluftstromes selbst der Gasentspannungsmaschine zugeführt, um damit den Gesamtwirkungsgrad der Brennstoffzellenanlage zu steigern. Priorität sollte jedoch die Vorkonditionierung des Kühlsystems der Brennstoffzellenanlage bzw. des Kühlmittels des (flüssigkeitsgekühlten) Brennstoffzellenstacks bspw. für einen bevorstehenden Beschleunigungsvorgang des Fahrzeugs haben.

Weiterhin kann vorgesehen sein, dass im Sinne einer Optimierung des Systemwirkungsgrades auch der Leistungsbedarf eines wie durchaus üblich Umgebungsluft durch die Kühlerstruktur fördernden Lüfters in den Berechnungen der elektronischen Steuereinheit berücksichtigt und geeignet, d.h. den Randbedingungen sowie der aktuell an die Kühlerstruktur erfindungsgemäß herangeführten Abluftmenge entsprechend eingestellt wird.

Die beigefügten Figuren 1, 2 zeigen jeweils in Form eines mechanischen Schaltbilds zwei Beispiele für die Anordnung von bei der Durchführung des erfindungsgemäßen Verfahrens zum Einsatz kommenden Elementen, während in der beigefügten Fig.3 ein Funktionsschaltbild dargestellt ist, welches die von einer elektronischen Steuereinheit verarbeiteten Signale und Signalgeber bzw. Signalempfänger zeigt.

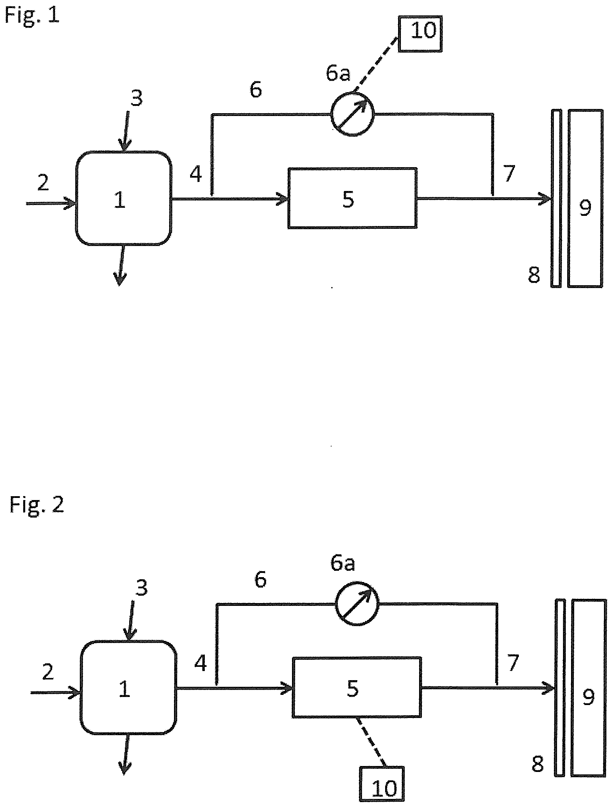

In Fig.1, 2 ist mit der Bezugsziffer 1 ein Brennstoffzellenstack (= Stapel von Brennstoffzellen) gekennzeichnet, dem gemäß Pfeil 2 neben Umgebungsluft 2 wie üblich Wasserstoff 3 (Pfeil 3) zur Verbrennung zugeführt wird. Der aus der zugeführten Umgebungsluft 2 nach der Verbrennung des Wasserstoffs 3 verbleibende Abluftstrom des Brennstoffzellenstacks trägt die Bezugsziffer 4. Dieser aufgrund der Förderung der Umgebungsluft 2 in den Brennstoffzellenstack 1 durch einen Verdichter oder dgl. einen höheren Druck als den Umgebungsluftdruck aufweisende Abluftstrom 4 wird zur teilweisen Rückgewinnung der im Abluftstrom 4 enthaltenen Energie einer Gasentspannungsmaschine 5 zugeführt oder kann diese in Abhängigkeit vom Öffnungsgrad eines Bypass-Ventils 6a in einem Bypass 6 umgehen. Stromab der Gasentspannungsmaschine 5 ist der aus dieser austretende Abluft-Teilstrom mit dem durch den Bypass 6 strömenden Abluft-Teilstrom zusammengeführt und gelangt danach als Abluftstrom 7 in ein Verteiler-Rohr 8, aus welchem dieser Abluftstrom solchermaßen vor bzw. an einer Kühlerstruktur 9 austritt, dass dieser Abluftstrom 7 nach dem Strahlpumpen-Prinzip eine Erhöhung des Massenstroms von Umgebungsluft durch diese Kühlerstruktur 9 bewirkt. Bei dieser Kühlerstruktur 9 handelt es sich nämlich um einen Luft-Kühlmittel-Wärmetauscher, in welchem ein umgewälztes Kühlmittel des flüssigkeitsgekühlten Brennstoffzellenstacks 1 rückgekühlt wird. Eine elektronische Steuereinheit 10 steuert bei Fig.1 ausschließlich den Öffnungsgrad des Bypass-Ventils 6a und damit die Aufteilung der Energierückgewinnung aus dem Abluftstrom 4 zwischen der Gasentspannungsmaschine 5 einerseits und der Kühlerstruktur 9, an welcher der Abluftstrom 7 eine Erhöhung des durch die Kühlerstruktur 9 strömenden Umgebungsluftstromes bewirkt, andererseits. Gemäß Fig.2 steuert die elektronische Steuereinheit zusätzlich den Druckabfall in der Gasentspannungsmaschine, bspw. über Verstellung der Leitschaufeln einer Turbine.

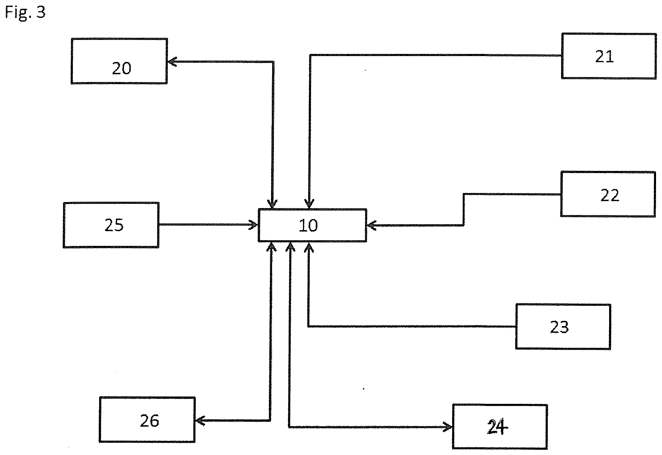

Figur 3 zeigt beispielshaft, welche Steuergrößen bzw. Signale die elektronische Steuereinheit 10 verarbeitet, d.h. erhält (der jeweilige Pfeil ist nur zur Steuereinheit 10 hin gerichtet) bzw. aussenden kann (der jeweilige Pfeil ist auch von der Steuereinheit 10 zum jeweiligen Element gerichtet, d.h. geht in beide Richtungen).

Dabei steht die Bezugsziffer 20 für ein Element zur Einstellung der Größe des dem Brennstoffzellenstack 1 zugeführten Umgebungsluft-Stromes 2. Die Bezugsziffer 21 steht für die Messung der Temperatur des in der Kühlerstruktur 9 rückzukühlenden Kühlmittels des Brennstoffzellenstacks 1.Die Bezugsziffer 22 steht für die Leistungsanforderung an den Brennstoffzellenstack 1 bzw. durch das Fahrzeug mit der Brennstoffzellenanlage. Die Bezugsziffer 23 steht für die Fahrgeschwindigkeit des Fahrzeugs, aus welcher sich die Größe des durch die Kühlerstruktur 9 ohne Zuhilfenahme des Brennstoffzellen-Abluftstromes 7 strömenden Umgebungsluftstroms ergibt, wobei diese Kühlerstruktur 9 im wesentlichen wie üblich im Frontbereich des Fahrzeugs angeordnet ist. Mit der Bezugsziffer 24 ist eine ggf. vorgesehene Verstelleinheit bezeichnet, mittels derer die Strömungsgeschwindigkeit und/oder Strömungsrichtung des aus dem Verteiler-Rohr 8 austretenden Abluftstromes 7 gegenüber der Kühlerstruktur 9 veränderbar ist, so wie dies in den beiden eingangs genannten nicht vorveröffentlichten deutschen Patentanmeldungen in Form eines Schiebers oder dgl. kurz beschrieben ist. Mit der Bezugsziffer 25 ist ein geeignetes Stellorgan gekennzeichnet, mit Hilfe dessen die elektronische Steuereinheit 10 die Aufteilung der Energierückgewinnung aus dem Abluftstrom 4 zwischen der Gasentspannungsmaschine 5 einerseits und der Kühlerstruktur 9, an welcher der Abluftstrom 7 eine Erhöhung des durch die Kühlerstruktur 9 strömenden Umgebungsluftstromes bewirkt, andererseits, vornehmen kann. Beispielsweise kann es sich bei diesem Stellorgan 25 um das in Fig.1,2 dargestellte Bypass-Ventil 6a handeln; alternativ (oder zusätzlich) um einen Verstellapparat an der Gasentspannungsmaschine 5, mit Hilfe dessen der Druckabfall in dieser veränderbar ist, beispielsweise in Form verstellbarer Leitschaufeln an einer als Turbine ausgeführten Gasentspannungsmaschine. Optional vorgesehen sein kann ferner eine Messvorrichtung 26 zur Messung des an der Kühlerstruktur 9 auf die Umgebungsluft einwirkenden und diese nach dem Strahlpumpen-Prinzip durch die Kühlerstruktur 9 fördernden Druckes, hervorgerufen durch den geeignet an die Kühlerstruktur 9 herangeführten Brennstoffzellen-Abluftstrom 7.

Insgesamt ist mit dem vorgestellten Betriebsverfahren eine verbesserte Kühlung eines bzw. des Brennstoffzellenstacks 1 möglich, was unter einer Vielzahl von Aspekten vorteilhaft ist.

## Patentansprüche

1. Betriebsverfahren für eine Brennstoffzellen-Anlage mit einer von Umgebungsluft durchströmten Kühlerstruktur (9) und einem Brennstoffzellenstack (1), von dessen Abluftstrom (4) zumindest ein Teil solchermaßen an die Kühlerstruktur (9) heranführbar ist, dass dieser herangeführte Abluftstrom (7) an der Kühlerstruktur (9) nach dem Strahlpumpen-Prinzip eine Erhöhung des Massenstroms der Umgebungsluft durch die Kühlerstruktur (9) bewirkt, und wobei zumindest ein Teil des Abluftstroms (4) des Brennstoffzellenstacks (1) durch eine Gasentspannungsmaschine (5) führbar ist und die Aufteilung der im Abluftstrom (4) enthaltenen und in der Gasentspannungsmaschine (5) und/oder nach dem Strahlpumpen-Prinzip an der Kühlerstruktur (9) zurückgewinnbaren Energie durch eine elektronische Steuereinheit (10) an Randbedingungen, unter denen die Aufteilung erfolgt, angepasst verändert wird.

2. Betriebsverfahren nach Anspruch 1, wobei die besagte Aufteilung der aus dem Abluftstrom (4) zurückgewinnbaren Energie von der elektronischen Steuereinheit (10) anhand der aktuellen und/oder in absehbarer Zeit zu erwartenden Temperatur des in der Kühlerstruktur (9) zu kühlenden Mediums und der aktuellen und/oder in absehbarer Zeit geforderten elektrischen Leistung des Brennstoffzellenstacks (1) eingestellt wird.

3. Betriebsverfahren nach Anspruch 1 oder 2, **dadurch gekennzeichnet, dass** bei der besagten Aufteilung weiterhin die Umgebungstemperatur und/oder die Fahrgeschwindigkeit eines mit der Brennstoffzellenanlage ausgerüsteten Fahrzeugs berücksichtigt wird.

4. Betriebsverfahren nach einem der vorangegangenen Ansprüche, wobei im Sinne einer Optimierung des Systemwirkungsgrades auch der Leistungsbedarf eines Umgebungsluft durch die Kühlerstruktur (9) fördernden Lüfters berücksichtigt und geeignet eingestellt wird.

5. Betriebsverfahren nach einem der vorangegangenen Ansprüche, wobei die Größe des durch die Gasentspannungsmaschine (5) geführten Abluftstromes (4) mittels eines regelbaren Bypass (6) zu dieser eingestellt wird.

6. Betriebsverfahren nach einem der vorangegangenen Ansprüche, wobei die Aufteilung der im Abluftstrom (4) enthaltenen und in der Gasentspannungsmaschine (5) sowie dieser nachgeschaltet nach dem Strahlpumpen-Prinzip an der Kühlerstruktur (9) zurückgewinnbaren Energie verändert wird, indem der Druckabfall in der Gasentspannungsmaschine (5) durch gezielte Einstellung der darin herrschenden Strömungsverhältnisse eingestellt wird.

## Claims

1. An operating method for a fuel cell system having a radiator structure (9) through which ambient air flows and having a fuel cell stack (1), the exhaust air flow (4) of the fuel cell stack being able to be guided at least in part to the radiator structure (9) such that, at the radiator structure (9), this exhaust air flow (7) guided thereto causes an increase in the mass flow of the ambient air through the radiator structure in accordance with the jet pump principle, and wherein at least some of the exhaust air flow (4) of the fuel cell stack (1) can be guided through a gas expansion machine (5) and the division of the energy contained in the exhaust air flow (4) and recoverable in the gas expansion machine (5) and/or at the radiator structure (9) in accordance with the jet pump principle is changed by means of an electronic control unit (10) in a manner adapted to boundary conditions under which the division is performed.

2. An operating method according to claim 1, wherein said division of the energy recoverable from the exhaust air flow (4) is adjusted by the electronic control unit (10) on the basis of the temperature of the medium to be cooled in the radiator structure (9) that is anticipated currently and/or in the foreseeable future and on the basis of the electrical power of the fuel cell stack (1) required currently and/or in the foreseeable future.

3. An operating method according to claim 1 or 2, **characterised in that** the ambient temperature and/or the speed of travel of a vehicle equipped with the fuel cell system are/is also taken into consideration in said division.

4. An operating method according to any one of the preceding claims, wherein the power demand of a fan conveying ambient air through the radiator structure (9) is also taken into consideration and is set appropriately in the sense of an optimisation of the degree of efficacy of the system.

5. An operating method according to any one of the preceding claims, wherein the magnitude of the exhaust air flow (4) guided through the gas expansion machine (5) is set by means of a controllable bypass (6) of the gas expansion machine.

6. An operating method according to any one of the preceding claims, wherein the division of the energy contained in the exhaust air flow (4) and recoverable in the gas expansion machine (5) and also downstream thereof at the radiator structure (9) in accordance with the jet pump principle is changed by setting the pressure drop in the gas expansion machine (5) by a targeted setting of the flow conditions prevailing in the gas expansion machine.

## Revendications

1. Procédé de gestion d'une installation de piles à combustible comprenant une structure de refroidissement (9) traversée par l'air environnant et un empilement de piles à combustible (1) dont au moins une partie du flux d'air de sortie (4) peut être transférée à la structure de refroidissement (9) de sorte que ce flux d'air de sortie (4) transféré à la structure de refroidissement (9) provoque selon le principe de la pompe à jet une augmentation du débit massique de l'air environnant passant au travers de la structure de refroidissement (9), au moins une partie du flux d'air de sortie (4) de l'empilement de piles à combustible (1) pouvant être transférée au travers d'une machine de dégazage (5), et la répartition de l'énergie renfermée dans le flux d'air de sortie (4) et pouvant être récupérée dans la machine de dégazage (5) et/ou selon le principe de la pompe à jet sur la structure de refroidissement (9) étant modifiée par une unité de commande électronique (10) de façon adaptée aux conditions limites dans lesquelles s'effectue la répartition.

2. Procédé de gestion conforme à la revendication 1,
selon lequel la répartition de l'énergie pouvant être récupérée à partir du flux d'air de sortie (4) est réglée par l'unité de commande électronique (10) à partir de la température actuelle et/ou pouvant être attendue dans un futur proche du fluide à refroidir dans la structure de refroidissement (9) et/ou de la puissance électrique fournie par l'empilement de piles à combustible (1) actuelle et/ou attendue dans un futur proche.

3. Procédé de gestion conforme à la revendication 1 ou 2,
**caractérisé en ce que**
lors de la répartition on prend en outre en considération la température de l'environnement et/ou la vitesse de déplacement d'un véhicule équipé de l'installation de piles à combustible.

4. Procédé de gestion conforme à l'une des revendications précédentes, selon lequel pour permettre une optimisation du rendement du système on prend également en considération la puissance nécessaire d'un ventilateur refoulant l'air environnant au travers de la structure de refroidissement (9) et on la règle de façon adaptée.

5. Procédé de gestion conforme à l'une des revendications précédentes, selon lequel le débit du flux d'air de sortie (4) passant au travers de la machine de dégazage (5) est réglé au moyen d'une conduite de dérivation réglable (6) montée en dérivation sur celle-ci.

6. Procédé de gestion conforme à l'une des revendications précédentes, selon lequel la répartition de l'énergie contenue dans le flux d'air de sortie (4) et récupérable dans la machine de dégazage (5) ainsi que sur la structure de refroidissement (9) montée en aval de celle-ci selon le principe de la pompe à jet, est modifiée en réglant la chute de tension dans la machine de dégazage (5) par réglage ciblé des rapports de flux présents dans celle-ci.
